# EUROPÄISCHE PATENTANMELDUNG

(11) **EP 3 128 128 A1**
(43) Veröffentlichungstag der Anmeldung: **08.02.2017**
(21) Anmeldenummer: 15180031.5
(22) Anmeldetag: 06.08.2015
(51) Int. Cl.: F01D 5/06, F16D 1/06

(54) **VERSCHRAUBTER ROTOR FÜR EINE STRÖMUNGSMASCHINE, INSBESONDERE DAMPFTURBINE**

(71) Anmelder: Siemens Aktiengesellschaft, 80333 München (DE)
(72) Erfinder: Logachev, Konstantin, 45147 Essen (DE); Tafler, Leonid, 45468 Mülheim an der Ruhr (DE); Zander, Uwe, 45475 Mülheim an der Ruhr (DE)

(57) **Zusammenfassung**

Die Erfindung betrifft einen Rotor (1) für eine Strömungsmaschine, insbesondere Dampfturbine, wobei der Rotor aus zwei Rotorabschnitten (2, 3) mit unterschiedlichen Materialien hergestellt ist, und die Rotorabschnitte kraft- und formschlüssig miteinander verbunden sind. Zum Einen mittels Schrauben (7), die über den Umfang (6) verteilt gleichmässig angeordnet sind, und zum Anderen mittels konisch geformter Anlageflächen (11). Die Erfindung betrifft ebenfalls ein Verfahren zur Herstellung eines solchen Rotors (1).

## Beschreibung

Die Erfindung betrifft einen Rotor für eine Strömungsmaschine, umfassend einen ersten Rotorabschnitt und einen zum ersten Rotorabschnitt benachbart anliegenden ersten Rotorabschnitt, wobei die Werkstoffeigenschaften des ersten Rotorabschnitts und des zweiten Rotorabschnitts unterschiedlich sind, wobei für kleine Schmiedestücke die Werkstoffeigenschaften des ersten Rotorabschnitts und des zweiten Rotorabschnitts gleich sein können.

Des Weiteren betrifft die Erfindung ein Verfahren zur Herstellung eines Rotors für eine Strömungsmaschine.

Strömungsmaschinen wie bspw. Dampfturbinen werden für die Energieerzeugung eingesetzt. Unter einer Dampfturbine im Sinne der vorliegenden Anmeldung wird jede Turbine oder Teilturbine verstanden, die von einem Arbeitsmedium in Form von Dampf durchströmt wird. Im Unterschied dazu werden Gasturbinen mit Gas und/oder Luft als Arbeitsmedium durchströmt, das jedoch völlig anderen Temperatur- und Druckbedingungen unterliegt als der Dampf bei einer Dampfturbine. Im Gegensatz zu Gasturbinen weist bei Dampfturbinen z. B. das einer Teilturbine zuströmende Arbeitsmedium mit der höchsten Temperatur gleichzeitig den höchsten Druck auf.

Dampfturbinen werden in der Regel in eine Hochdruck-Teilturbine, eine Mitteldruck-Teilturbine und eine Niederdruck-Teilturbine eingeteilt. Die Temperatur und Druckwerte des in die Hochdruck-, Mitteldruck-, Niederdruck-Teilturbine einströmenden Dampfes sind unterschiedlich. Dies stellt eine Herausforderung dar für die Konzipierung und Herstellung einer Dampfturbine. Die unterschiedlichen Dampfparameter führen zu unterschiedlichen Eigenschaften der Materialien. So sind in einer Hochdruck-Teilturbine und Mitteldruck-Teilturbine warmfeste Eigenschaften des Materials im Bereich der Einströmung erforderlich, wobei im Bereich der Abströmung eher altzähe Eigenschaften erforderlich sind. Die Temperaturverteilung im Betrieb der Dampfturbine nimmt vom Einströmbereich zum Abströmbereich hin ab.

Ein Bauteil einer Dampfturbine das besonderen thermischen Belastungen ausgesetzt ist, ist der Rotor, der seiner Länge nach unterschiedlichen Betriebsbelastungen ausgesetzt ist. Das erfordert unterschiedliche Werkstoffeigenschaften. Daher werden solche Rotoren aus zwei oder mehreren Werkstoffen ausgebildet. Ein Werkstoff wird hierbei zum einen hohe warmfeste Eigenschaften aufweisen müssen und ein weiterer Werkstoff hohe Zähigkeiten im Wellenzentrum aufweisen. Ein weiterer Vorteil Rotoren aus zwei Werkstoffen auszubilden ist, dass insgesamt der Rotor günstiger hergestellt werden kann, da kostengünstigere Werkstoffe eingesetzt werden können. Allerdings ist in jedem Fall eine feste Verbindung zwischen zwei unterschiedlichen Rotorteilen erforderlich, um den rotordynamischen Anforderungen bei Betriebsdrehzahl und in Störfällen gerecht werden zu können.

Bekannt ist es eine Schweißung einzusetzen, um zwei verschiedene Rotorteile miteinander zu verbinden. Allerdings stellt dies eine enorme technische Herausforderung dar, da Schweiß- und Wärmenachbehandlungs- Know-How-erforderlich ist. Des Weiteren muss die Schweißung anhand aufwendiger Wurzel- und anschließender Qualitätsprüfungen wie z.B. Ultraschall- und/oder Röntgenverfahren geprüft werden.

Bekannt ist es hierbei eine WIG-Engspaltschweißung und anschließend eine Endbearbeitung durchzuführen. Insbesondere bei Rotoren, die als kombinierte Mittel- und Niederdruck-Teilturbine verwendet werden, ist der Einsatz von zwei verschiedenen Materialien erforderlich. Der Schweiß- und Wärmenachbehandlungsprozess und die notwendige Prüfung der Schweißverbindung sind zeitaufwendige und damit kostenintensive Verfahren. Die Prozess- und Qualitätsanforderungen sind zudem sehr hoch.

Aufgabe der Erfindung ist es eine Alternative zur Schweißverbindung anzugeben.

Gelöst wird dies durch einen Rotor für eine Strömungsmaschine, insbesondere Dampfturbine, umfassend einen ersten Rotorabschnitt und einen zum ersten Rotorabschnitt benachbart anliegenden zweiten Rotorabschnitt, wobei die Werkstoffeigenschaften des ersten Rotorabschnitts und des zweiten Rotorabschnitts unterschiedlich sein können, wobei der erste Rotorabschnitt kraft- und formschlüssig mit dem zweiten Rotorabschnitt verbunden ist.

Des Weiteren wird die Aufgabe gelöst durch ein Verfahren zur Herstellung eines Rotors für eine Strömungsmaschine, insbesondere Dampfturbine gemäß Anspruch 8.

Durch die erfindungsgemäße Herstellung des Rotors ergeben sich Kostenvorteile von bis zu 15 % und eine Minimierung des Produktionsrisikos durch Vereinfachung des Produktionsprozesses. Die einzelnen Rotorabschnitte und die Verbindungselemente können ohne größeren Aufwand, je nach Verschleißstatus bzw. Beschädigung, vor Ort ausgetauscht werden.

Vorteilhafte Weiterbildungen sind in den Unteransprüchen angegeben.

In einer ersten vorteilhaften Weiterbildung ist der erste Rotorabschnitt mittels Schrauben, insbesondere Stiftschrauben mit dem zweiten Rotorabschnitt verbunden.

In einer weiteren vorteilhaften Weiterbildung sind die Schrauben, insbesondere Stiftschrauben, über den Umfang verteilt, gleichmäßig angeordnet. Dadurch können potentielle Unwuchten besser entgegengewirkt werden.

In einer weiteren vorteilhaften Weiterbildung weist der erste Rotorabschnitt eine erste konische Anlagefläche auf, wobei der zweite Rotorabschnitt eine zur ersten konischen Anlagefläche komplementär ausgebildete zweite konische Anlagefläche aufweist.

In einer weiteren vorteilhaften Weiterbildung ist zwischen zwei Schrauben jeweils ein Zylinderstift angeordnet. Diese dienen der Lagerfixierung und Kraftübertragung.

Durch die erfindungsgemäße Anordnung wird ein minimaler Bauraum bei gleichzeitiger Sicherstellung der Montierbarkeit und der Demontierbarkeit sichergestellt.

In einer weiteren vorteilhaften Weiterbildung hat der erste Rotorabschnitt warmfeste Materialeigenschaften und der zweite Rotorabschnitt kaltzähe Materialeigenschaften.

In einer vorteilhaften Weiterbildung sind die Schrauben, insbesondere Stiftschrauben unter einem Winkel α zur Rotationsachse geneigt, wobei gilt: 30° < α < 75°.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnungen näher beschrieben. Dies soll die Ausführungsbeispiele nicht maßgeblich darstellen, vielmehr ist die Zeichnung, wo zur Erläuterung dienlich in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.
- Figur 1: zeigt einen erfindungsgemäßen Rotor;
- Figur 2: zeigt eine Detailansicht aus Figur 1;
- Figur 3: zeigt eine weitere Detailansicht der Figur 1.

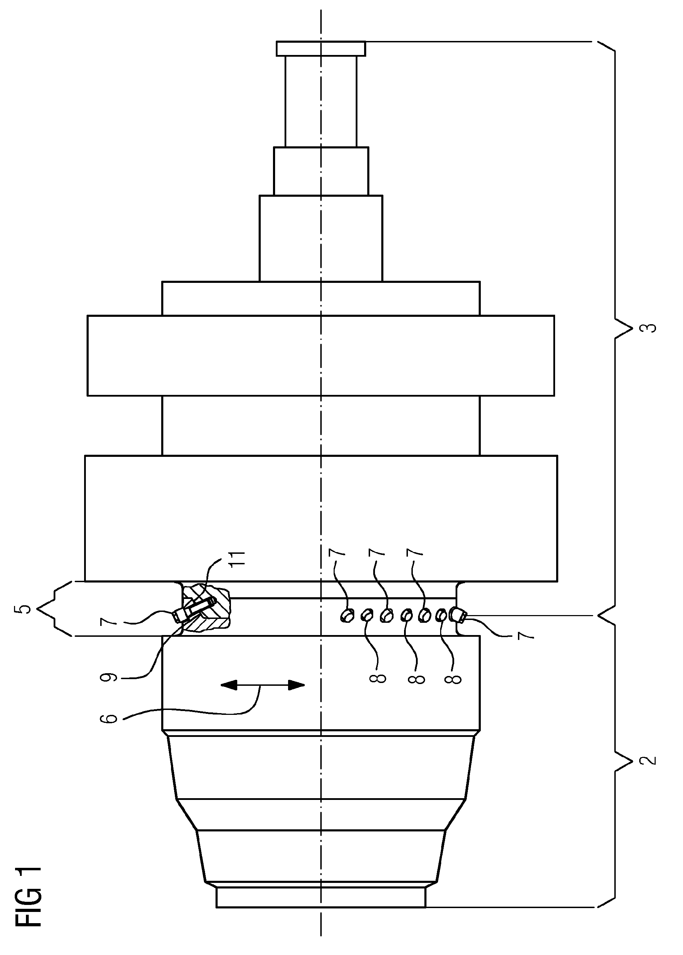

Figur 1 zeigt einen erfindungsgemäßen Rotor 1. Der Rotor 1 umfasst einen ersten Rotorabschnitt 2 und einen benachbart dazu berührend anliegenden zweiten Rotorabschnitt 3. Der Rotor 1 ist um eine Rotationsachse 4 drehbar ausgeführt.

Der erste Rotorabschnitt 2 ist aus einem Material ausgebildet, das unterschiedlich ist zu dem Material des zweiten Rotorabschnitts 3. In einer alternativen Ausführungsform ist das Material des ersten Rotorabschnitts 2 identisch mit dem Material des zweiten Rotorabschnitts 3. Der Rotor 1 wird bspw. bei Dampfturbinen eingesetzt. Laufschaufeln sind aus Gründen der Übersichtlichkeit nicht dargestellt.

Der erste Rotorabschnitt 2 wird kraft- und formschlüssig mit dem zweiten Rotorabschnitt 3 im Verbindungsbereich 5 verbunden. Der erste Rotorabschnitt 2 wird mittels Schrauben 7, insbesondere Stiftschrauben, mit dem zweiten Rotorabschnitt 3 verbunden. Die Schrauben 7, insbesondere Stiftschrauben sind über einen Umfang 6 gleichmäßig verteilt angeordnet. Das bedeutet, dass der Abstand zwischen zwei Schrauben 7 über den Umfang 6 verteilt, immer gleich groß ist.

Zwischen den Schrauben 7, insbesondere Stiftschrauben sind Zylinderstifte 8 angeordnet.

Der erste Rotorabschnitt 2 umfasst warmfeste Eigenschaften. Der zweite Rotorabschnitt 3 umfasst kaltzähe Materialeigenschaften.

Es sind aber auch gleichartige Rohwerkstoffe denkbar.

Der erste Rotorabschnitt 2 weist an seiner Stirnseite eine konusförmige Anlagefläche 9 auf.

Der zweite Rotorabschnitt 3 weist auf der Stirnseite 10 ebenfalls eine Anlagefläche 11 auf, die komplementär zur Anlagefläche 9 ausgebildet ist.

Der erste Rotorabschnitt 2 wird form- und kraftschlüssig mit dem zweiten Rotorabschnitt 3 verbunden. Dies erfolgt über die Stiftschrauben- und Zylinderstifte 8.

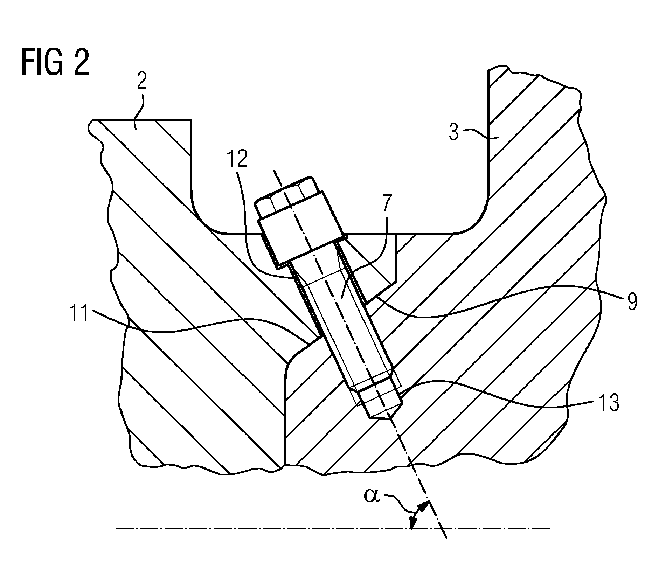

Die Figur 2 zeigt eine Detaildarstellung der Figur 1. Die Figur 2 zeigt eine vergrößerte Darstellung der Schraube 7. Die Schraube 7 wird unter einem Winkel α zur Rotationsachse 4 geneigt ausgebildet. Dabei gilt 30° < α < 75°. Der erste Rotorabschnitt 2 weist eine Bohrung 12 auf. Der zweite Rotorabschnitt 3 weist eine Sacklochbohrung 13 auf, die in der Verlängerung zur Bohrung 12 ausgeführt ist. In die Sacklochbohrung 13 ist ein Gewinde ausgeführt, das komplementär zum Gewinde der Schraube 7 ausgebildet ist. Die Schraube 7 wird vom ersten Rotorabschnitt 2 aus in die Bohrung 12 eingeführt und mit einem in der Sacklochbohrung 13 ausgebildeten Gewinde verschraubt. Dadurch liegen die konusförmigen Anlageflächen 9 und 11 auf. Dadurch wird der erste Rotorabschnitt 2 und der zweite Rotorabschnitt 3 zueinander zentriert.

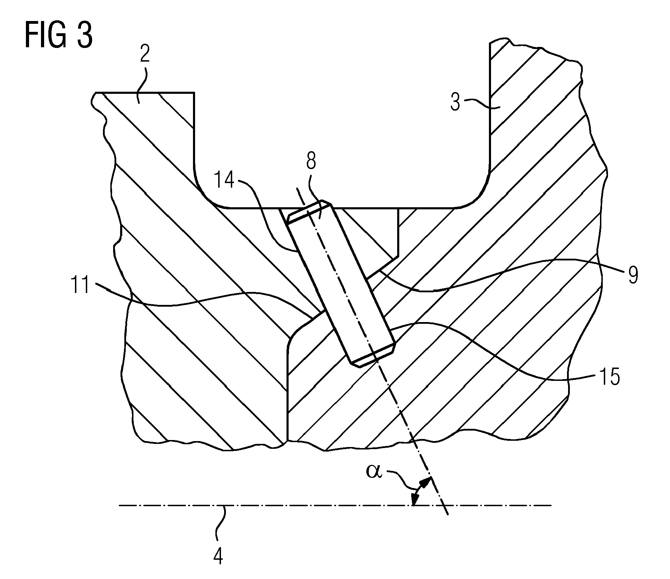

Die Figur 3 zeigt eine detaillierte Darstellung der Zylinderstifte 8. Der Zylinderstift 8 wird über eine Bohrung 14 durch den ersten Rotorabschnitt 2 geführt und fluchtet in einer zweiten Bohrung 15 im zweiten Rotorabschnitt 3. Der Zylinderstift 8 ist ebenfalls unter dem gleichen Winkel α zur Rotationsachse 4 hin geneigt. In alternativen Ausführungsformen kann der Zylinderstift 8 unter einem anderen Winkel als α zur Rotationsachse hin geneigt sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotor (1) für eine Strömungsmaschine,
insbesondere Dampfturbine,
umfassend einen ersten Rotorabschnitt (2) und einen zum ersten Rotorabschnitt (2) benachbart berührend anliegenden zweiten Rotorabschnitt (3),
wobei die Werkstoffeigenschaften des ersten Rotorabschnitts (2) und des zweiten Rotorabschnittes (3) unterschiedlich oder gleich sind,
**dadurch gekennzeichnet, dass**
der erste Rotorabschnitt (2) kraft- und formschlüssig mit dem zweiten Rotorabschnitt (3) verbunden ist.

2. Rotor (1) nach Anspruch 1,
wobei der erste Rotorabschnitt (2) mittels Schrauben (7), insbesondere Stiftschrauben mit dem zweiten Rotorabschnitt (3) verbunden ist.

3. Rotor (1) nach Anspruch 2,
wobei die Schrauben(7), insbesondere Stiftschrauben, über den Umfang (6) verteilt gleichmäßig angeordnet sind.

4. Rotor (1) nach Anspruch 2 oder 3,
wobei der erste Rotorabschnitt (2) eine erste konische Anlagefläche (11) aufweist, wobei der zweite Rotorabschnitt (3) eine zur ersten konischen Anlagefläche (11) komplementär ausgebildete zweite konische Anlagefläche (11) aufweist.

5. Rotor (1) nach einem der Ansprüche 2 bis 4,
wobei zwischen zwei Schrauben (7) jeweils ein Zylinderstift (8) angeordnet ist.

6. Rotor (1) nach einem der vorhergehenden Ansprüche,
wobei der erste Rotorabschnitt (2) warmfeste Materialeigenschaften und der zweite Rotorabschnitt (3) kaltzähe Materialeigenschaften aufweist.

7. Rotor (1) nach einem der Ansprüche 2 bis 6,
wobei die Schrauben (7), insbesondere Stiftschrauben, unter einem Winkel α zur Rotationsachse (4) hin geneigt sind, wobei gilt: 30° < α < 75°.

8. Verfahren zur Herstellung eines Rotors (1) für eine Strömungsmaschine, insbesondere Dampfturbine,
wobei ein erster Rotorabschnitt (2) mit einem zweiten Rotorabschnitt (3) kraft- und formschlüssig verbunden wird, wobei die Materialeigenschaften des ersten Rotorabschnitts (2) und des zweiten Rotorabschnitts (3) unterschiedlich sind.
